# EUROPEAN PATENT SPECIFICATION

(11) **EP 3 633 425 B1**
(45) Date of publication and mention of the grant of the patent: **18.01.2023**
(21) Application number: 18808793.6
(22) Date of filing: 18.05.2018
(51) Int. Cl.: G02B 5/30, B29C 48/00, B29C 48/08, B29C 48/305, B29C 48/40, B29C 48/88, B29D 7/01, C08L 53/02, B29C 55/04, B29C 55/14, B29C 55/16

(54) **RETARDATION FILM AND PRODUCTION METHOD**
VERZÖGERUNGSFILM UND HERSTELLUNGSVERFAHREN
FILM DE DÉPHASAGE, ET PROCÉDÉ DE FABRICATION ASSOCIÉ

(30) Priority: 31.05.2017 JP 2017108686
(43) Date of publication of application: 08.04.2020
(73) Proprietor: Zeon Corporation, Tokyo 100-8246 (JP)
(72) Inventor: ASADA, Takeshi, Tokyo 100-8246 (JP)
(74) Representative: Hansen, Norbert
(86) International application number: PCT/JP2018/019363
(87) International publication number: WO 2018/221276

(56) References cited:
- EP-A1- 2 159 610
- JP-A- H05 164 920
- JP-A- H05 164 920
- JP-A- S61 146 301
- JP-A- 2006 283 010
- JP-A- 2009 116 197
- JP-A- 2011 013 378
- JP-A- 2011 013 378
- JP-B2- 4 447 224
- JP-B2- 5 430 131
- RUZETTE ANNE-VALERIE ET AL: "Block copolymers in tomorrow's plastics", NATURE MATERIALS, NATURE PUBLISHING GROUP, LONDON, GB, vol. 4, 1 January 2005 (2005-01-01), pages 19-32, XP003030697, ISSN: 1476-4660, DOI: 10.1038/NMAT1295

## Description

### Field

The present invention relates to a phase difference film and a method for producing the same.

### Background

A phase difference film such as a λ/2 plate and a λ/4 plate may be provided in a display device such as a liquid crystal display device to improve display quality thereof. For example, a phase difference film may be provided in an in-plane switching (IPS) liquid crystal display device for the purpose of viewing angle compensation or the like.

A phase difference film for the viewing angle compensation in the IPS liquid crystal display device is required to have an NZ factor of greater than 0 and smaller than 1. Further, the NZ factor is preferably a value equal to or close to 0.5. In order to achieve the NZ factor having such a value, three-dimensional refractive indices of the film, nx, ny, and nz, need to satisfy a relationship of nx > nz > ny. Further, a phase difference film which exhibits desired optical characteristics by only using a single layer resin film is more preferable than a phase difference film which exhibits desired optical characteristics by combining a plurality of resin films.

It is difficult to produce such a phase difference film. This is because a film satisfying the relationship of nx > nz > ny cannot be achieved just by processing a normal resin film with a normal method such as stretching, and consequently it is necessary to control the refractive indices using some types of material and/or method that are different from normal ones.

As the method for producing a film satisfying the relationship of nx > nz > ny, a method including a step of contracting a resin film (Patent literature 1) and a method in which multiple layers are combined (Patent literature 2) are known.

### Citation List

### Patent Literature

Patent Literature 1: Japanese Patent Application Laid-Open No. Hei. 5-157911 A (corresponding publication: U.S. Patent Application Publication No. 5245456)
Patent Literature 2: International Publication No. 2008/146924 (corresponding publication: U.S. Patent Application Publication No. 2010283949)
Patent Literature 3: Japanese Patent Application JP 2011 013378 A
Patent Literature 4: Japanese Patent Application JP 2009 116197 A
Patent Literature 5: European Patent Application EP 2 159 610 A1

### Summary

### Technical Problem

The method of Patent literature 1 is bound to problems of a high cost and low productivity for achieving the step of contracting a film. Further, as the method of Patent literature 2 achieves expression of the desired optical characteristics by means of combination of a large number of layers, the structure of the product is complicated, and consequently the method is bound to problems of a high cost and low productivity. Patent literatures 3 to 5 disclose further phase difference or light scattering films.

Thus, an object of the present invention is to provide a phase difference film which has useful optical characteristics and can be easily produced at a low cost, and a method for producing the phase difference film.

### Solution to Problem

As a result of studies to solve the aforementioned problems, the present inventor has found that the aforementioned problem can be solved by adopting a specific copolymer exhibiting a phase separation structure as a material constituting a phase difference film.

That is, the present invention is as follows.
<1> A phase difference film consisting of a resin C contains a copolymer P containing a polymerization unit A and a polymerization unit B,
   the phase difference film including a phase separation structure that exhibits a structural birefringence, the phase separation structure including a phase including as a main component the polymerization unit A and another phase including as a main component the polymerization unit B, and
   the phase difference film having an NZ factor of greater than 0 and smaller than 1, the NZ factor being a value represented by (nx - nz)/(nx - ny), wherein nx represents the refractive index in the direction in which a maximum refractive index is given among in-plane directions, ny represents the refractive index in the direction, among the in-plane directions of the film, orthogonal to the direction giving nx, and nz represents the refractive index in the thickness direction of the film, the refractive indices being measured at a wavelength of 540 nm;
   wherein the copolymer P includes:
      a triblock copolymer P' that is an (A)-(B)-(A) triblock copolymer having blocks (A) including as a main component the polymerization unit A and a block (B) including as a main component the polymerization unit B; and
      a diblock copolymer P" that is an (A)-(B) diblock copolymer having the block (A) and the block (B),
   the ratio of the diblock copolymer P" relative to the total of the triblock copolymer P' and the diblock copolymer P" is 5 to 40% by weight.
<2> The phase difference film according to <1>, wherein the phase separation structure has a form of any of lamella, cylinder and spheroid, and
   the distance between phases in the phase separation structure is 200 nm or less, the distance between phases being a value obtained by fitting of a scattering pattern to a theoretical curve, wherein the scattering pattern is a pattern obtained by measurement of small angle X-ray scattering.
<3> The phase difference film according to <1> or <2>, wherein the polymerization unit A is a unit represented by the general formula (A): 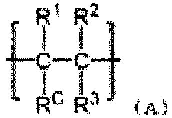
   wherein R^{c} is a group selected from the group consisting of a phenyl group, a biphenyl group, a naphthyl group, an anthracene group, a phenanthrene group, a naphthacene group, a pentacene group, and a terphenyl group, and
   R¹ to R³ are each independently a group selected from the group consisting of a hydrogen atom and an alkyl group of 1 to 12 carbon atoms.
<4> The phase difference film according to any one of <1> to <3>, wherein the polymerization unit B is a unit represented by the general formula (B-1), a unit represented by the general formula (B-2), or a combination of these: 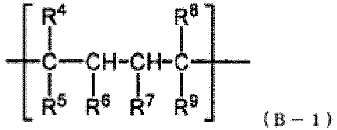 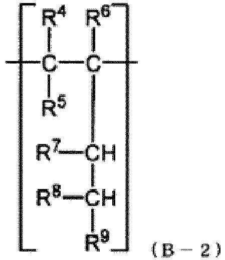 wherein R⁴ to R⁹ are each independently a group selected from the group consisting of a hydrogen atom and an alkyl group of 1 to 6 carbon atoms.
<5> The phase difference film according to any one of <1> to <4>, wherein the copolymer P has a negative intrinsic birefringence value.
<6> The phase difference film according to any one of <1> to <5>, wherein the polymerization unit A has a negative intrinsic birefringence value, and the polymerization unit B has a positive intrinsic birefringence value.
<7> A method for producing the phase difference film according to any one of <1> to <6>, comprising:
   a step of forming a single layer film of a resin C; and
   a step of causing phase separation of the resin C in the film.
<8> The method for producing the phase difference film according to <7>, wherein the step of causing phase separation of the resin C includes a step of applying to the film a stress along a thickness direction thereof.
<9> The method for producing the phase difference film according to <7> or <8>, wherein the step of forming the film includes melt-extruding the copolymer P in a single layer.
<10> The method for producing the phase difference film according to any one of <7> to <9>, further comprising a step of stretching the film.

### Advantageous Effects of Invention

According to the present invention, the phase difference film which has useful optical characteristics and can be easily produced at a low cost, and the method for producing the phase difference film can be provided. Description of Embodiments

Hereinafter, the present invention will be described in detail with reference to embodiments and examples.

In the following description, a "long-length" film refers to a film with the length that is 5 times or more the width, and preferably a film with the length that is 10 times or more the width, and specifically refers to a film having a length that allows a film to be wound up into a rolled shape for storage or transportation. The upper limit of the ratio of the length to the width is not particularly limited, but is 100,000 times or less the width thereof, for example.

In the following description, an in-plane retardation Re of a film is a value represented by Re = (nx - ny) × d unless otherwise specified. A thickness direction retardation Rth of a film is a value represented by Rth = {(nx + ny)/2 - nz} × d unless otherwise specified. An NZ factor is a value represented by (nx - nz)/(nx - ny) unless otherwise specified. Herein, nx represents a refractive index in a direction in which the maximum refractive index is given among directions perpendicular to the thickness direction of the film (in-plane directions), ny represents a refractive index in a direction, among the above-mentioned in-plane directions of the film, orthogonal to the direction giving nx, nz represents a refractive index in the thickness direction of the film, and d represents the thickness of the film. The measurement wavelength is 540 nm unless otherwise specified.

In the following description, a "polarizing plate", a "λ/2 plate", and a "λ/4 plate" include not only a rigid member but also a flexible member such as a resin film, unless otherwise specified.

In the following description, the slow axis of a film refers to a slow axis in the plane of the film, unless otherwise specified.

The positivity/negativity of intrinsic birefringence value of a resin is defined by the behavior of the refractive index of a molded product when the molded product of a resin is stretched. That is, the resin having a positive intrinsic birefringence value is a resin in which the refractive index of the molded product in the stretching direction is larger than that before stretching. The resin having a negative intrinsic birefringence value is a resin in which the refractive index of the molded product in the stretching direction is smaller than that before stretching. The intrinsic birefringence value may be calculated from a dielectric constant distribution.

That a certain polymerization unit has a positive intrinsic birefringence value means that a polymer composed only of the polymerization unit has a positive intrinsic birefringence value. That a certain polymerization unit has a negative intrinsic birefringence value means that a polymer composed only of the polymerization unit has a negative intrinsic birefringence value. Therefore, the positivity/negativity of intrinsic birefringence value of the polymerization unit can be easily determined by preparing a homopolymer composed only of the polymerization unit, making the polymer into a molded product having an arbitrary shape, stretching the molded product, and measuring the optical characteristics thereof. Generally, many of the polymerization units of hydrocarbons such as alkenes, dienes, and the like are known to have positive intrinsic birefringence values, while many of the polymers of hydrocarbons having aromatic rings in their side chains such as styrene, vinylnaphthalene, and the like are known to have negative intrinsic birefringence values.

In the following description, a block in a polymer composed of a polymerization unit produced by polymerization of a certain monomer may be referred to by using the name of the monomer. For example, a block constituted by a polymerization unit produced by polymerization of 2-vinylnaphthalene may be referred to as a "2-vinylnaphthalene block", and a block constituted by a polymerization unit produced by polymerization of isoprene may be referred to as an "isoprene block".

### [1. Phase difference film]

The phase difference film of the present invention consists of a resin C.

### [1.1. Resin C]

The resin C contains a specific copolymer P. The copolymer P contains a polymerization unit A and a polymerization unit B. Generally, a block copolymer means a polymer having a molecular structure in which a plurality of types of blocks are connected, and each block is a chain constituted by connecting polymerization units. The specific block copolymer in the present invention has specific blocks (A) and (B). In the following description, such a specific block copolymer may be simply referred to as a "block copolymer".

The polymerization unit A may be a unit having a negative intrinsic birefringence value. On the other hand, the polymerization unit B may be a unit having a positive intrinsic birefringence value.

Examples of the polymerization unit A may include a unit represented by the following general formula (A).

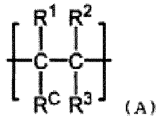

R^{c} is a group selected from the group consisting of a phenyl group, a biphenyl group, a naphthyl group, an anthracene group, a phenanthrene group, a naphthacene group, a pentacene group, and a terphenyl group.

R¹ to R³ are each independently a group selected from the group consisting of a hydrogen atom and an alkyl group of 1 to 12 carbon atoms. Examples of such an alkyl group may include a methyl group, an ethyl group, a propyl group, and a hexyl group. In the formula (A), R² and R³ are preferably a hydrogen atom. More preferably, R² and R³ are a hydrogen atom and R^{c} is a naphthyl group, or R² and R³ are a hydrogen atom and R¹ is a hydrogen atom. More preferably, R² and R³ are a hydrogen atom, R^{c} is a naphthyl group, and R¹ is a hydrogen atom.

The polymerization unit A may be obtained by polymerizing a monomer (a) which forms the polymerization unit A. Examples of the monomer (a) may include vinylnaphthalene and its derivatives. Examples of the vinylnaphthalene may include 1-vinylnaphthalene and 2-vinylnaphthalene. Examples of vinylnaphthalene derivatives may include α-methyl-1-vinylnaphthalene, α-ethyl-1-vinylnaphthalene, α-propyl-1-vinylnaphthalene, α-hexyl-1-vinylnaphthalene, α-methyl-2-vinylnaphthalene, α-ethyl-2-vinylnaphthalene, α-propyl-2-vinylnaphthalene, and α-hexyl-2-vinylnaphthalene. The vinylnaphthalene and its derivatives are preferably 2-vinylnaphthalene from the viewpoint of industrial availability.

As the polymerization unit A, the copolymer P may have solely one type of the polymerization unit, and may also have two or more types thereof in combination at any ratio. Therefore, as the monomer (a) to form the polymerization unit A, one type thereof may be solely used, and two or more types thereof may also be used in combination at any ratio.

Examples of the polymerization unit B may include units represented by the following general formulae (B-1) and/or (B-2).

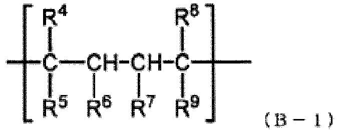

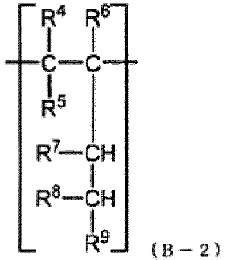

R⁴ to R⁹ are each independently a group selected from the group consisting of a hydrogen atom and an alkyl group of 1 to 6 carbon atoms. Examples of such an alkyl group may include a methyl group, an ethyl group, a propyl group, and a hexyl group. Preferably, R⁴ to R⁹ are each independently a hydrogen atom or a methyl group.

The polymerization unit B may be obtained by polymerizing the monomer (b) that forms the polymerization unit B to form a polymerization unit, and hydrogenating the double bond, if any, in the polymerization unit. Examples of the monomer (b) may include compounds represented by the following general formula (bm).

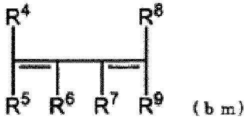

Preferred examples of the monomer (b) may include butadiene (all of the R⁴ to R⁹ in the formula (bm) are a hydrogen atom), isoprene (the R⁶ or R⁷ of the R⁴ to R⁹ in the formula (bm) is a methyl group and the other groups are a hydrogen atom), 1,3-pentadiene, 2,3-dimethyl-1,3-butadiene, 1,3-hexadiene, 2-methyl-1,3-pentadiene, 3-methyl-1,3-pentadiene, and 2,4-dimethyl-1,3-pentadiene. Among these, butadiene and isoprene are more preferable from the viewpoint of obtaining the resin C having excellent transparency, heat resistance, and processability. Preferred examples of the polymerization unit B may include those having as the R⁴ to R⁹ those that are the same as R⁴ to R⁹ for the preferred examples of the monomer (b).

As the polymerization unit B, the copolymer P may have solely one type of the polymerization unit, and may also have two or more types thereof in combination at any ratio. Therefore, as the monomer (b) to form the polymerization unit B, one type thereof may be solely used, and two or more types thereof may also be used in combination at any ratio.

When the copolymer P has the block (A), the block (A) may have an optional polymerization unit other than the polymerization unit A. Examples of such an optional polymerization unit may include a unit formed by polymerizing an optional monomer copolymerizable with the monomer (a) and a unit formed by hydrogenation thereof.

When the copolymer P has the block (B), the block (B) may have an optional polymerization unit other than polymerization unit B. Examples of such an optional polymerization unit may include a polymerization unit formed by polymerizing the monomer (b) with a unhydrogenated double bond remaining therein, and a unit formed by polymerizing an optional monomer copolymerizable with the monomer (b) and a unit formed by hydrogenation thereof.

However, from the viewpoint of the exhibiting the optical characteristics and the mechanical characteristics of the resin C, it is preferable that the ratio of the polymerization unit A in the block (A) and the ratio of the polymerization unit B in the block (B) are both high. The ratio of the polymerization unit A in the block (A) is preferably 50% by weight or more, more preferably 75% by weight or more, and even more preferably, the block (A) is composed of only the polymerization unit A. The ratio of the polymerization unit B in the block (B) is preferably 50% by weight or more, more preferably 75% by weight or more, and even more preferably, the block (B) is composed of only the polymerization unit B.

The blocks (A) and (B) are preferably incompatible with each other. When these are incompatible, the phase difference film of the present invention having a specific NZ factor can be easily obtained. Whether the blocks (A) and (B) are incompatible with each other may be determined on the basis of the compatibility of the homopolymer composed of the polymerization unit A and the homopolymer composed of the polymerization unit B, which have the same degree of molecular weight as the size of these blocks in the block copolymer. The compatibility of such homopolymers may be determined by mixing the homopolymers to form a mixture, placing the mixture at a temperature at which the homopolymers are melted, and find out whether the phases are separated from each other.

The molecular structure of the copolymer P is not particularly limited as long as it has the polymerization unit A and the polymerization unit B, and may be a molecular structure having any optional structure. For example, when the copolymer P is a block copolymer, the block copolymer may be a linear block copolymer or a graft block copolymer.

Examples of the linear block copolymer may include a di-block copolymer which has a block configuration of (A)-(B) in which the blocks (A) and (B) are connected (this may be referred to herein as "copolymer P""), a triblock copolymer having a block configuration of (A)-(B)-(A) in which the block (A), the block (B), and another block (A) are connected in this order (this may be referred to herein as "copolymer P'"), and a linear block copolymer having a block configuration in which a larger number of blocks are connected. Examples of the block configuration in which a large number of blocks are connected may include (A)-((B)-(A))n-(B)-(A), and (B)-((A)-(B))n-(A)-(B) (n is an integer greater than or equal to 1).

Examples of the graft block copolymer may include a block copolymer having a block configuration of (A)-g-(B) in which the block (B) is connected to the block (A) as a side chain.

From the viewpoint of exhibiting desired optical characteristics in the resin C, the copolymer P may preferably be a block copolymer having a molecular structure having two or more polymer blocks (A) and one or more polymer blocks (B) per molecule. More preferably, the block copolymer may be a triblock copolymer having a block configuration of (A)-(B)-(A).

The resin C may contain two or more types thereof in combination at any ratio.

When the resin C contains two types of the block copolymers, claimed herein is a combination of a diblock copolymer P" having a block configuration of (A)-(B) and a triblock copolymer P' having a block configuration of (A)-(B)-(A). By including the copolymer P' and the copolymer P" in combination, the resin C having desired optical and mechanical characteristics can be easily obtained. More specifically, when the resin C contains the copolymer P' and the copolymer P" in combination, and the copolymer P' and the copolymer P" have units represented by the above-described general formulae (B-1) and/or (B-2) as the polymerization unit B constituting the block (B), the processability of the resin C can be improved. As a result, the phase difference film of the present invention can be easily produced.

When the resin C contains the copolymer P' and the copolymer P" in combination, the ratios thereof may be adjusted as appropriate to obtain the desired optical and mechanical characteristics. Specifically, the ratio of the copolymer P" relative to the total of the copolymer P' and the copolymer P" in the resin C is 5% by weight or more, more preferably 10% by weight or more, and still more preferably 15% by weight or more, and is 40% by weight or less. By setting the ratio of the copolymer P" to fall within the aforementioned range, desired optical and mechanical characteristics can be obtained. In particular, by setting the ratio of the copolymer P" to the above-described upper limit or less, the heat resistance of the resin C can be made favorable.

In the copolymer P, the weight fraction of the polymerization unit A may be adjusted so as to exhibit desired optical characteristics. The weight fraction of the polymerization unit A refers to the weight of the polymerization unit A relative to the total weight of the polymerization unit A and the polymerization unit B. When the resin C contains a plurality of types of copolymer P's, the weight fraction of the polymerization unit A referred to herein is the weight of the polymerization unit A relative to the total weight of the polymerization unit A and the polymerization unit B in the entirety of the plurality of types of the copolymer P's contained. The weight fraction of the polymerization unit A in the copolymer P is 50% by weight or more, and preferably 55% by weight or more, and is 90% by weight or less, and preferably 85% by weight or less.

The molecular weight of the copolymer P is not particularly limited, and may be appropriately adjusted within a range in which favorable optical and mechanical characteristics can be obtained. The molecular weight of the copolymer P may be within a range of, for example, 100,000 to 400,000. The glass transition temperature Tg of the copolymer P may be within a range of, for example, 110°C to 150°C.

It is preferable that the resin C has a negative intrinsic birefringence value. Such a negative intrinsic birefringence value may be imparted thereto by adjusting the ratio of polymerization units in the copolymer P. Specifically, a resin having a negative intrinsic birefringence value may be obtained by adjusting the weight fraction of the polymerization unit A within the range of not less than the above-mentioned lower limit. Since the resin C has a negative intrinsic birefringence value, desired optical characteristics can be imparted to the phase difference film.

The resin C may consist of only the copolymer P or may contain an optional component in addition to the copolymer P. Examples of the optional component may include additives such as a dye, a pigment, an antioxidant, and the like. The ratio of such an optional component may be within a range that does not impair the advantageous effects of the present invention. Specifically, the ratio of the block copolymer in the resin C is preferably 98% by weight or more, more preferably 99% by weight or more, and even more preferably, the resin C is composed of only the copolymer P.

### [1. 2. Optical characteristics of phase difference film]

The phase difference film of the present invention has an NZ factor of greater than 0 and smaller than 1. The NZ factor is preferably 0.2 or more, more preferably 0.3 or more, and further more preferably 0.4 or more, and is preferably 0.8 or less, more preferably 0.7 or less, and further more preferably 0.6 or less.

The phase difference film having such an NZ factor can be easily obtained by adopting the specific product described above as a resin C and performing a preferable production method using this product as a material. The phase difference film having such an NZ factor can be usefully used particularly in an application such as viewing angle compensation in a display device such as an IPS liquid crystal display device. However, it is difficult to obtain such a phase difference film just by performing processing using a normal method such as stretching. Thus, the phase difference film of the present invention is highly useful as it has useful optical characteristics and can be easily produced.

An in-plane retardation Re and a thickness direction retardation Rth of the phase difference film of the present invention may be adjusted to desired values in accordance with an application of the phase difference film. For example, in a case where the phase difference film of the present invention is used as a λ/2 plate, Re may be set to be within a range of 250 nm to 290 nm. In a case where the phase difference film of the present invention is used as a λ/4 plate, Re may be set to be within a range of 120 nm to 160 nm.

### [1. 3. Other characteristics, shapes, etc. of phase difference film]

The phase difference film of the present invention includes a phase separation structure that exhibits a structural birefringence. The phase separation structure is formed in the layer of the resin C constituting the phase difference film. The phase separation structure of the resin C means that a phase including as a main component a polymerization unit A and a phase including as a main component a polymerization unit B are separated to form distinguishable different phases in the layer by selforganization of the portion formed of the polymerization unit A (e.g., the block (A)) and the portion formed of the polymerization unit B (e.g., the block (B)) in the resin C. In the following description, these phases may be simply referred to as "phase of polymerization unit A" and "phase of polymerization unit B". The orientation layer exhibiting such a phase separation structure can exhibit structural birefringence when the structure is sufficiently smaller than wavelengths of light.

The structural birefringence is birefringence arising in a structure which includes a plurality of types of phases having different refractive indices such as the aforementioned phase separation structure. For example, a structure in which a phase having a refractive index n1 includes in its inside a phase having a refractive index n2 different from n1 can exhibit the structural birefringence. The structural birefringence is clearly different from orientation birefringence caused by molecular orientation by stretching in a sense of the feature that the structural birefringence arises even when each phase is formed of an isotropic medium.

The magnitude and direction of the structural birefringence may be controlled by adjusting the shape, arrangement, and volume fraction of each phase exhibiting the phase separation structure, a difference in refractive indices between phases, and the like so as to exhibit the desired structural birefringence. The details are, for example, described in "The form birefringence of macromolecules (W. L. Bragg et al., 1953)".

The greater the difference in refractive indices between the phase including as a main component a polymerization unit A and the phase including as a main component a polymerization unit B, the more efficiently the structural birefringence can be exhibited. The difference in refractive indices between both phases may be set to preferably 0.05 or more, more preferably 0.10 or more, and further more preferably 0.15 or more.

The content ratio of the polymerization unit A in the phase including as a main component the polymerization unit A and the content ratio of the polymerization unit B in the phase including as a main component the polymerization unit B may be adjusted by appropriately adjusting the material for producing the copolymer P and the operation for the production. The content ratio is preferably at a high level for exhibiting the effects. The content ratio of the polymerization unit A in the phase including as a main component the polymerization unit A is preferably 50% by weight or more, more preferably 75% by weight or more, and further more preferably 100% by weight. The content ratio of the polymerization unit B in the phase including as a main component the polymerization unit B is preferably 50% by weight or more, more preferably 75% by weight or more, and further more preferably 100% by weight.

By controlling the shape and arrangement of the phase separation structure, a negative C-plate like birefringence can be imparted to the phase difference film of the present invention. For example, in a case where the layer constituting the film exhibits a lamellar phase separation structure, when an average of lamella lamination directions (directions perpendicular to layers constituting lamellas) is close to a normal direction of the film, the layer can exhibit the negative C-plate like birefringence. In a case where the layer exhibits a cylindrical phase separation structure and a case where the layer exhibits a spheroid phase separation structure, for example, when the long axes of the cylinders or the elliptic spheres exist in the in-plane direction and the long axes are randomly directed in the plane, the layer can exhibit the negative C-plate like structural birefringence.

By combining such structural birefringence and molecular orientation birefringence caused by orientation of molecules constituting the resin C, it becomes possible to easily obtain the phase difference film having the NZ factor within a specific range which is not easily produced by a normal method.

Specific examples of the phase separation structure may include a lamellar structure, a spheroid structure, and a cylinder structure. In any case, preferable effects may be obtained by having the structure capable of exhibiting the negative C-plate like structural birefringence. That is, the structure is preferably a structure that exhibits the structural birefringence in which the refractive index in the thickness direction is smaller than an average refractive index in the in-plane direction. Which of these phase separation structures is to be exhibited is influenced by various factors. A main factor that influences the manner how the structure is exhibited is a volume ratio between the phase including as a main component the polymerization unit A and the phase including as a main component the polymerization unit B. The volume ratio between these phases can be adjusted by changing a ratio of the blocks (A) and (B) in the block copolymer.

In the phase separation structure, the size of the structure may be appropriately adjusted within a range in which the phase difference film can provide desired optical characteristics. For example, the distance between phases is preferably 200 nm or less, more preferably 150 nm or less, and further more preferably 100 nm or less, and the size of each phase resulting from phase separation is preferably 100 nm or less, more preferably 80 nm or less, and further more preferably 60 nm or less. The distance between phases refers to, for example, the distance between lamellas (i.e., a pitch of repeating units of lamellar layers) in the case of the lamellar phase separation, and the distance between cylinders in the case of a cylinder phase separation structure. The size of a phase resulting from phase separation refers to the thickness of the lamella in the case of the lamellar phase separation and the radius of the cylinder in the case of the cylinder phase separation. As the distance between phases, a value obtained by fitting to a theoretical curve of the scattering pattern that is obtained by measurement of small angle X-ray scattering may be adopted.

When the distance between phases and the size of the phase resulting from phase separation are sufficiently shorter than visible light in this manner, it becomes possible to exhibit the structural birefringence and prevent coloration of the film and a reduction in a total light transmittance. The lower limit of the distance between phases is not particularly limited. However, for example, the lower limit thereof may be 10 nm or more. The lower limit of the size of a phase resulting from phase separation is not particularly limited. However, for example, the lower limit thereof may be 10 nm or more. The distance between phases may be adjusted by adjusting the molecular structure of the copolymer P. For example, the distance may be adjusted by adopting a block copolymer as the copolymer P, and appropriately adjusting factors such as lengths of the blocks (A) and (B).

The thickness of the phase difference film of the present invention may be appropriately adjusted within a range in which desired optical and mechanical characteristics can be obtained. Specifically, the thickness is preferably 10 µm or more, and more preferably 15 µm or more, and is preferably 100 µm or less, and more preferably 90 µm or less.

### [2. Production method]

The phase difference film of the present invention may be produced by a production method including a step of forming a single layer film of the resin C and a step of causing phase separation of the resin C in the film. This production method will be described hereinbelow as the production method of the present invention.

Specific examples of a film forming method for performing the step of forming a film of the resin C may include a solution casting method, a melt extrusion method, a calendering method, and a compression molding method. For efficiently producing a large amount of phase difference films, a melt extrusion method is particularly preferable. A melt extrusion method may be performed by supplying the melted resin C to a die such as a T-die and extruding the resin C from the die using an extruder such as a twin-screw extruder.

The step of causing phase separation of the resin C in the film may be performed after the step of forming a film or simultaneously with the step of forming a film.

The phase separation step may be performed, for example, by gradually cooling the melted resin C. Specifically, when the melt extrusion method and other methods are employed in the step of forming a film, after the resin is molded in a molten state, an operation of cooling the resin under a mild cooling condition may be performed. Although the specific action mechanism is uncertain, a phase separation structure of the resin C which exhibits the negative C-plate like structural birefringence can be easily formed by performing such gradual cooling, and thereby it becomes possible to easily obtain a phase difference film having desired optical characteristics. For example, generally, when a film is formed by a melt extrusion method using an extruder and a die, a step of casting a resin on a cooling roll is performed after the resin is extruded from a die. In these steps, the gradual cooling can be achieved by setting the die temperature and the cooling roll temperature to constitute a mild cooling condition. Although the cooling condition is influenced by factors other than the die temperature and the cooling roll temperature, adjusting the die temperature and the cooling roll temperature can achieve a milder cooling condition than normal cooling. The cooling condition may be relatively set with respect to a glass transition temperature Tg of the resin C. More specifically, it is preferable to perform cooling with the die temperature of (Tg + 100)°C to (Tg + 150) °C and the cooling roll temperature of (Tg - 50)°C to (Tg + 50)°C.

In the phase separation step, in addition to or instead of the gradual cooling described above, a step of pressurizing a film may be performed. By applying a pressure to a film of the resin C, the phase separation structure that exhibits the negative C-plate like structural birefringence can be easily formed, and thereby a phase difference film having desired optical characteristics can be easily obtained.

Specifically, the pressurizing step may be performed by applying a pressure to the resin C having a sheet piece shape in its thickness direction. For performing such an operation, a pressurizing tool which applies a pressure to the surface of a film, such as a metal mold, may be used. In a case where a film of the resin C is molded by a compression molding method, the pressurizing step may be performed simultaneously with molding as a part of the molding step, and may also be performed after molding. The temperature of the resin C at the same time of the pressurizing may be set to (Tg + 10)°C to (Tg + 150)°C. The pressure for the pressurizing is preferably 1 MPa or higher, more preferably 5 MPa or higher, and further more preferably 10 MPa or higher, and is preferably 50 MPa or lower, more preferably 45 MPa or lower, and further more preferably 40 MPa or lower. The pressurizing time is preferably 10 seconds or longer, more preferably 20 seconds or longer, and further more preferably 30 seconds or longer, and is preferably 180 seconds or shorter, more preferably 150 seconds or shorter, and further more preferably 120 seconds or shorter. By setting the pressurizing conditions to fall within the ranges described above, a film of uniform thickness and phase separation structure can be obtained.

The pressurizing step may also be performed by a device that continuously performs an operation of applying a pressure to the long-length resin C. For performing such an operation, a pressurizing tool such as a pressure roll may be used. In a case where a film of the resin C is molded by a melt extrusion method, the pressurizing step may be performed by passing the resin C that has been extruded from the die through a gap between a pair of pressure rolls and applying a pressure to the resin C using them. The linear pressure at the time of the pressurizing is preferably 10 N/cm or more, more preferably 50 N/cm or more, and further more preferably 100 N/cm or more, and is preferably 500 N/cm or less, more preferably 450 N/cm or less, further more preferably 400 N/cm or less. The temperature of the resin C at the time of the pressurizing may be set to (Tg + 10)°C to (Tg + 150)°C. By setting the pressurizing conditions to fall within the ranges described above, a film of uniform thickness and phase separation structure can be obtained.

The film of the resin C having the phase separation structure is normally further subjected to a stretching step to give thereto a desired phase difference. In this manner, the phase difference film of the present invention can be obtained. The stretching step may be performed on a line continuous to the production line for molding the film of the resin C. Alternatively, the produced film of the resin C may be once wound into a film roll, and then the film may be unwound from the film roll and subjected to the stretching step. The stretching step is usually performed by a flat stretching method in which a film is stretched in its in-plane direction. Examples of the flat stretching method may include a uniaxial stretching method and a biaxial stretching method. In the uniaxial stretching method, a film is stretched in one direction in its plane, and examples of the uniaxial stretching method may include a free-width uniaxial stretching method and a constant-width uniaxial stretching method. In the biaxial stretching method, a film is stretched in two directions in its plane. Examples of the biaxial stretching method may include a sequential biaxial stretching method and a simultaneous biaxial stretching method. Stretching in each direction may be performed by free-width stretching or constant-width stretching. Specific examples of the sequential biaxial stretching method may include an all-tenter system and a roll-tenter system. The stretching method for performing the stretching step in the production method of the present invention may be any of these stretching methods, and a method suitable for obtaining a desired phase difference film may be selected.

The stretching temperature in the stretching step is preferably (Tg - 5)°C or higher, more preferably (Tg + 5)°C or higher, and further more preferably (Tg + 15)°C or higher, and is preferably (Tg + 50)°C or lower, and more preferably (Tg + 40)°C or lower. When the stretching temperature is set to the upper limit or lower, instability in the step due to softening of the film can be prevented. On the other hand, when the stretching temperature is set to the lower limit or higher, rupture or whitening at the time of the stretching can be prevented.

Whether the structural birefringence is actually arisen may be confirmed by measuring optical characteristics of a pre-stretch film. A pre-stretch film formed by an ordinary method such as extrusion molding, press working, and solvent casting usually has values of Re and Rth of nearly zero due to random molecular orientation. On the other hand, values of Re and Rth in a pre-stretch film exhibiting the structural birefringence are observed to be larger than values of Re and Rth observed in a usual pre-stretch film formed by an ordinary method. Thus, by measuring those values, whether or not the structural birefringence is exhibited can be confirmed . However, the confirmation whether or not the structural birefringence is exhibited may be performed more reliably by additionally performing structure observation using an electron microscope or small angle X-ray scattering.

In the production method of the phase difference film of the present invention, a heat treatment step may be performed as an optional step. The heat treatment step may be performed at any stage of the production method. However, the heat treatment step is preferably performed between the step of forming a film of the resin C and the stretching step. In a case where the heat treatment is performed after the stretching step, a phase difference caused by stretching is reduced by relaxation, and thus a condition of the heat treatment needs to be restricted within a range in which such a reduction in the phase difference can be suppressed.

The heat treatment step may be performed by holding the film of the resin C in a device such as a float-type oven or a pin tenter and heating the film. By performing such a heat treatment, formation of the phase separation structure can be promoted. The temperature in the heat treatment is preferably Tg or higher, more preferably (Tg + 20)°C or higher, and further more preferably (Tg + 25)°C or higher, and is preferably (Tg + 50)°C or lower, and more preferably (Tg + 40)°C or lower. By setting the temperature in the heat treatment to fall within the aforementioned range, formation of the phase separation structure can be easily promoted. Further, by setting the temperature in the heat treatment to the aforementioned upper limit or lower, softening of the film can be prevented, and thus a uniform phase difference film in thickness and optical characteristics can be easily produced. The heat treatment step may be performed in a state in which the film of the resin C is not substantially stretched. The phrase "not substantially stretched" means that a stretching ratio of the film in any direction is normally less than 1.1 times, and preferably less than 1.01 times.

### [3. Application]

The phase difference film of the present invention may be used as a constituent element of a display device such as a liquid crystal display device and an organic electroluminescent display device. For example, in a display device, the phase difference film may be used as an optical element such as a λ/2 plate and a λ/4 plate. Such an optical element may be provided in a display device as an element having a function of viewing angle compensation, antireflection or the like.

### [Examples]

Hereinafter, the present invention will be specifically described by illustrating Examples.

In the following description, "%" and "part" representing quantity are on the basis of weight, unless otherwise specified. The operations described below were performed under the conditions of normal temperature and normal pressure in the atmospheric air, unless otherwise specified.

### [Evaluation methods]

### (Re and NZ factor of phase difference film)

Re and NZ factor at a wavelength of 540 nm were obtained using AXOSCAN manufactured by Axometrics, Inc.

### (Phase separation structure)

The obtained film was cut to a size of 2 mm × 4 mm, and 30 pieces of the cut films were stacked up in a thickness direction and fixed to a folder. A scattering pattern was obtained under conditions of a camera length of 4 m, an X-ray energy of 8.2 KeV, a measurement q-range of about 0.06 to 3 nm⁻¹, and an exposure time per sample of 60 seconds using a small angle X-ray scattering measurement facility (AichiSR, beam line 8S3). The scattering pattern thus obtained was approximated to a theoretical curve by fitting to calculate a phase separation structure and a distance between phases.

A cross section of the films was set as an X-ray irradiation surface, and an integration range was set to 20° in each of the thickness direction and a direction perpendicular to the thickness direction. The distance between phases was calculated from data obtained from each integration and an average value of the distances between phases in the thickness direction and the direction perpendicular to the thickness direction was adopted as a measurement value.

### (Processability)

The phase difference film was cut to obtain a stripshaped sample. The cutting of the sample was performed such that a lengthwise direction of the sample corresponded to a direction perpendicular to the stretching direction. The width of the sample was set to 10 mm. This sample was subjected to a tensile test. The number of samples subjected to the tensile test was 20. The tensile test was performed under conditions of an initial chuck interval of 100 mm and a test speed of 100 mm/min. The sample was observed for the presence or absence of rupture until the force reached the yield point and evaluated on the basis of the following evaluation criteria:
A ... Less than 10% of samples were ruptured before reaching the yield point,
B ... 10% or more and less than 30% of samples were ruptured before reaching the yield point,
C ... 30% or more and less than 50% of samples were ruptured before reaching the yield point, and
D ... More than 50% of samples were ruptured before reaching the yield point.

### (Display characteristics: λ/2 plate)

As a polarizing plate, a long-length polarizing plate having a transmission axis in its width direction (product name "HLC2-5618S" manufactured by Sanritz Corp., thickness 180 µm) was prepared. The protective film on one surface side of the polarizing plate was removed, and the phase difference film obtained in each of Examples 1 to 11 and Comparative Examples was bonded to this surface. The bonding was performed such that a slow axis direction of the phase difference film matches a transmission axis direction of the polarizing plate. By this operation, a polarizing plate that includes the phase difference film of Example or Comparative Example as a substitute for one of the protective films on both sides was obtained.

With the polarizing plate thus obtained, a polarizing plate originally included on a viewing side of a commercially available IPS liquid crystal display device (23MP47HQ manufactured by LG Electronics) was replaced to obtain a liquid crystal display device including the phase difference film obtained in Examples and Comparative Examples. For the replacement, the polarizing plate was disposed such that a side provided with the phase difference film obtained in Examples and Comparative Examples was disposed on a liquid crystal cell side. Further, the transmission axis of a polarizer was set to the same direction as that of a polarizer of the polarizing plate originally included in the IPS liquid crystal display device.

The displaying state of the liquid crystal display device thus obtained was observed at various azimuth angles from a tilted direction with respect to the display surface (at 45° relative to the normal direction). The liquid crystal display device having high contrast in all directions as compared with the one before the replacement was evaluated as "good", while the liquid crystal display device having contrast equal to or less than the one before the replacement in one or more directions was evaluated as "poor".

### (Display characteristics: λ/4 plate)

As a polarizing plate, a long-length polarizing plate having a transmission axis in its width direction (product name "HLC2-5618S" manufactured by Sanritz Corp., a thickness of 180 µm) was prepared. The protective film on one surface side of the polarizing plate was removed, and the phase difference film obtained in Example 12 was bonded to this surface. The bonding was performed such that a slow axis direction of the phase difference film forms an angle of 45° with a transmission axis direction of the polarizing plate. By this operation, a polarizing plate that includes the phase difference film of Example as a substitute for one of the protective films on both sides was obtained.

With the polarizing plate thus obtained, a polarizing plate originally included on a viewing side of a commercially available organic EL display device (OLED55EG9600 manufactured by LG Electronics) was replaced to obtain an organic EL display device including the phase difference film obtained in Example. For the replacement, the polarizing plate was disposed such that a side provided with the phase difference film obtained in Example was disposed on an organic EL cell side. Further, the transmission axis of a polarizer is set to the same direction as that of a polarizer of the polarizing plate originally included in the organic EL display device.

The displaying state of the organic EL display device thus obtained was observed at various azimuth angles from a tilted direction with respect to the display surface (at 45° relative to the normal direction). The device was evaluated as "good" if the reflectance was reduced in all directions as compared with the one before the replacement, while the liquid crystal display device was evaluated as "poor" if the reflectance was equal to or more than that of the one before the replacement in one or more directions.

### [Example 1]

### (1-1. Triblock copolymer)

In a pressure-resistant reaction vessel that had been subjected to drying and nitrogen-replacement, 500 ml of toluene as a solvent and 0.29 mmol of n-butyllithium as a polymerization catalyst were placed, and 14 g of 2-vinylnaphthalene as a polymerization unit A was added thereto to allow them to react at 25°C for 1 hour. Thus a polymerization reaction in a first stage was performed.

After completing the polymerization reaction in the first stage, 7 g of isoprene as a polymerization unit B was added and the resulting mixture was further reacted at 25°C for 1 hour, thereby performing a polymerization reaction in a second stage. As a result, a diblock copolymer having a block configuration of (2-vinylnaphthalene block)-(isoprene block) was obtained in the reaction mixture. Subsequently, 14 g of 2-vinylnaphthalene as a polymerization unit A was further added to the reaction mixture to allow them to react at 25°C for 1 hour. Thus a polymerization reaction in a third stage was performed. As a result, a triblock copolymer having a block configuration of (2-vinylnaphthalene block)-(isoprene block)-(2-vinylnaphthalene block) was obtained in the reaction mixture. The reaction mixture was poured into a large quantity of 2-propanol to precipitate the triblock copolymer for separation.

The triblock copolymer thus obtained was dissolved in 700 ml of p-xylene to prepare a solution. To this solution, 7.6 g of p-toluenesulfonyl hydrazide was added, and a reaction was performed at a temperature of 130°C for 8 hours. By this reaction, hydrogen was added to the double bond of the isoprene unit. After completing the addition of hydrogen, the reaction solution was poured into a large quantity of 2-propanol to obtain 32 g of an (A)-(B)-(A) triblock copolymer as a lump product.

The triblock copolymer thus obtained was analyzed by NMR. As a result, the weight ratio of the 2-vinylnaphthalene unit relative to the hydrogenated isoprene unit in the triblock copolymer was 80:20, and thus the weight fraction of the block (A) was 80%. The hydrogenation rate of the triblock copolymer was 99%. The weight-average molecular weight of the triblock copolymer measured by GPC was 250,000. The glass transition temperature of the triblock copolymer measured by TMA was 135°C.

### (1-2. Pre-stretch film)

The triblock copolymer obtained in (1-1) was used as the resin C. The resin C was pulverized to powders by a pulverizer. The powders thus obtained were placed between a pair of polyimide films (each having a thickness of 100 µm) to form a layered body. The layered body was pressurized. The pressurization was performed using an electric heating pressurizing device. The pressurization was performed under conditions of a temperature of 290°C, a pressure of 40 MPa, and a pressurizing time of 5 minutes. After completing the pressurization, the pressure was released and the layered body was cooled to the room temperature in the air, and the polyimide films were then removed. By this operation, a pre-stretch film 1 having a thickness of 75 µm was produced.

When the pre-stretch film 1 thus obtained was observed by a small angle scattering method in which an X-ray was made incident onto the cross section of the film, a lamellar structure having a distance between phases of 40 nm and a thickness of 20 nm was observed.

Further, a section piece of the cross section parallel to the thickness direction was produced and observed by TEM to confirm a lamellar phase separation structure.

Re and Rth of the obtained pre-stretch film 1 were measured to be as follows: Re = 15 nm and Rth = 90 nm. This confirmed that characteristics close to those of the negative C-plate were obtained by having the structural birefringence.

### (1-3. Phase difference film)

The pre-stretch film 1 obtained in (1-2) was cut to prepare a rectangular film having a size of 80 mm × 80 mm.

The rectangular film was subjected to free-width uniaxial stretching. The stretching was performed using a batch-type stretching device manufactured by Toyo Seiki Kogyo Co. Ltd. The stretching was performed under conditions of a stretching temperature of 145°C, a stretching ratio of 1.5 times, and a stretching speed of 33% per minute. As a result, a phase difference film having a thickness of 60 µm was obtained.

The phase difference film thus obtained was evaluated for Re, Nz factor, processability, and display characteristics.

### [Examples 2 to 3]

A phase difference film was obtained and evaluated by the same operations as those of Example 1 except that the stretching conditions in (1-3) were changed as shown in Table 1.

### [Examples 4 to 7]

Except for the following change points, a phase difference film was obtained and evaluated by the same operations as those of Example 1.
- The charge amounts of 2-vinylnaphthalene and isoprene in the polymerization reaction of (1-1) were changed. The addition amount was divided so that the amount of 2-vinylnaphthalene added in the polymerization reaction in the first stage and the amount of 2-vinylnaphthalene added in the polymerization reaction in the third stage were equal to each other. The total amount of 2-vinylnaphthalene and isoprene charged was 35 g that is the same as in Example 1. The weight fraction of the block (A) in the triblock copolymer thus obtained and the glass transition temperature of the resin C were as shown in Table 1. In the X-ray observation and the TEM observation in (1-2), a lamellar structure generated by phase separation was observed in each example.
- The stretching conditions in (1-3) were changed as shown in Table 1.

### [Examples 8 to 10]

### (8-1. Diblock copolymer)

In a pressure-resistant reaction vessel that had been subjected to drying and nitrogen-replacement, 500 ml of toluene as a solvent and 0.29 mmol of n-butyllithium as a polymerization catalyst were placed, and 14 g of 2-vinylnaphthalene as a polymerization unit A was added thereto to allow them to react at 25°C for 1 hour. Thus a polymerization reaction in a first stage was performed.

After completing the polymerization reaction in the first stage, 7 g of isoprene as a polymerization unit B was added and the resulting mixture was further reacted at 25°C for 1 hour, thereby performing a polymerization reaction in a second stage. As a result, a diblock copolymer having a block configuration of (2-vinylnaphthalene block)-(isoprene block) was obtained in the reaction mixture. The reaction mixture was poured into a large quantity of 2-propanol to precipitate the diblock polymer for separation.

The diblock copolymer thus obtained was dissolved in 700 ml of p-xylene to prepare a solution. To this solution, 7.6 g of p-toluenesulfonyl hydrazide was added, and a reaction was performed at a temperature of 130°C for 8 hours. By this reaction, hydrogen was added to the double bond of the isoprene unit. After completing the addition of hydrogen, the reaction solution was poured into a large quantity of 2-propanol to obtain 18 g of an (A)-(B) diblock copolymer as a lump product.

The diblock copolymer thus obtained was analyzed by NMR. As a result, the weight ratio of the 2-vinylnaphthalene unit relative to the hydrogenated isoprene unit in the diblock copolymer was 67:33, and thus the weight fraction of the block (A) was 67%. The hydrogenation rate of the diblock copolymer was 99%. The weight-average molecular weight of the diblock copolymer measured by GPC was 150,000. The glass transition temperature of the diblock copolymer measured by TMA was 120°C.

### (8-2. Copolymer mixture)

The triblock copolymer obtained in (1-1) of Example 1 and the diblock copolymer obtained in (8-1) were mixed in the ratio shown in Table 1 to obtain a copolymer mixture. This mixture was used as the resin C. The glass transition temperature of the resin C was as shown in Table 1.

### (8-3. Phase difference film)

Except for the following change points, a phase difference film was obtained and evaluated by the same operations as those in (1-2) to (1-3) of Example 1.
- The copolymer mixture obtained in (8-2) was used instead of the triblock copolymer obtained in (1-1) as the resin C. In the X-ray observation and the TEM observation in (1-2), the phase separation structure in the form of lamellae was confirmed in Examples 8 to 9, and the phase separation structure in the form of a cylinder having a cylinder diameter of 15 nm and an interphase distance of 50 nm was confirmed in Example 10.
- The stretching conditions in (1-3) were changed as shown in Table 1.

### [Example 11]

A phase difference film was obtained and evaluated by the same operations as those of Example 1 except that the amount of the resin C powders to be placed between the pair of polyimide films was reduced in the step (1-2). As a result of reducing the amount of the resin C powders, the thickness of the pre-stretch film was 38 µm.

### [Comparative Example 1]

### (C1-1. Polymer)

In a pressure-resistant reaction vessel that had been subjected to drying and nitrogen-replacement, 500 ml of toluene as a solvent and 0.29 mmol of n-butyllithium as a polymerization catalyst were placed, and 14 g of 2-vinylnaphthalene as a polymerization unit A was added thereto to allow them to react at 25°C for 2 hours. Thus a polymerization reaction was performed. As a result, a polymer was obtained in the reaction mixture. The reaction mixture was poured into a large quantity of 2-propanol to precipitate the polymer for separation.

The polymer thus obtained was analyzed by NMR. As a result, the polymer was composed of only the 2-vinylnaphthalene unit, and thus the weight fraction of the block (A) was 100%. The weight-average molecular weight of the polymer measured by GPC was 250,000. The glass transition temperature of the polymer measured by TMA was 143°C.

### (C1-2. Phase difference film)

Except for the following change points, a phase difference film was obtained and evaluated by the same operations as those in (1-2) to (1-3) of Example 1.
- As the resin C, the polymer obtained in (C1-1) was used instead of the triblock copolymer obtained in (1-1). In the TEM observation in (1-2), a structure caused by phase separation was not observed.
- The stretching conditions in (1-3) were changed as shown in Table 1.

Refractive indices of the phase difference film thus obtained were nx = nz > ny, and thus the obtained phase difference film was a negative A-plate.

### [Comparative Examples 2 and 3]

Except for the following change points, a phase difference film was obtained and evaluated by the same operations as those in Example 1.
- The charged amounts of 2-vinylnaphthalene and isoprene in the polymerization reaction in (1-1) were changed. However, the amount of 2-vinylnaphthalene added in the polymerization reaction in the first stage was adjusted to the same amount as the amount of 2-vinylnaphthalene added in the polymerization reaction in the third stage. The total charged amount of 2-vinylnaphthalene and isoprene was 35g that is the same as in Example 1. The weight fraction of the block (A) in the triblock copolymer thus obtained and the glass transition temperature of the resin C were as shown in Table 1. The weight-average molecular weight of the triblock copolymer measured by GPC was 250,000 both in Comparative Examples 2 and 3.
- The stretching conditions in (1-3) were changed as shown in Table 1.

Refractive indices of the phase difference film obtained in Comparative Example 2 were nx = nz > ny, and thus the obtained phase difference film was a negative A-plate.

The pre-stretch film obtained in Comparative Example 3 showed severe white turbidity and therefore unavailable as a phase difference film.

### [Comparative Example 4]

### (C4-1. Random copolymer)

In a pressure-resistant reaction vessel that had been subjected to drying and nitrogen-replacement, 500 ml of toluene as a solvent and 0.29 mmol of n-butyllithium as a polymerization catalyst were added, and a mixture prepared by mixing 28 g of 2-vinylnaphthalene and 7 g of isoprene was added thereto to perform a polymerization reaction at 25°C for 1 hour. The polymerization liquid thus obtained was poured into a large quantity of 2-propanol to cause precipitation. Thus a random copolymer was obtained.

The copolymer thus obtained was dissolved in 700 ml of p-xylene, and 7.6 g of p-toluenesulfonyl hydrazide was added thereto. Then a hydrogenation reaction was performed at a temperature of 130°C for 8 hours. After the reaction, the reaction solution was poured into a large quantity of 2-propanol to obtain 30 g of a lump-shaped random copolymer in which the olefin portion of isoprene was hydrogenated (hydrogenation rate: 99%). The copolymer thus obtained had a ratio of 2-vinylnaphthalene unit/hydrogenated isoprene unit of 67:33% by weight from the result of NMR measurement and a weight-average molecular weight of 250,000 by GPC measurement.

Further, the glass transition point measured by TMA was 100°C.

### (C4-2. Phase difference film)

Except for the following change points, a phase difference film was obtained and evaluated by the same operations as those in (1-2) to (1-3) of Example 1.
- As the resin C, the random copolymer obtained in (C4-1) was used instead of the triblock copolymer obtained in (1-1). In the TEM observation in (1-2), a structure caused by phase separation was not observed.

### [Example 12]

Except for the following change points, a phase difference film was obtained and evaluated by the same operations as those in Example 1.
- In the step (1-1), the monomers used for the polymerization reaction in the first stage and the polymerization reaction in the third stage were changed to a mixture containing 2-vinylnaphthalene and 1-vinylnaphthalene at a weight ratio of 1:1. Further, the amount of the mixture of 1-vinylnaphthalene and 2-vinylnaphthalene used for the polymerization reaction in the first stage, the amount of isoprene used for polymerization reaction in the second stage, and the amount of the mixture of 1-vinylnaphthalene and 2-vinylnaphthalene used for the polymerization reaction in the third stage were set to 9 g, 6 g, and 9 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 90,000, a weight-average molecular weight (Mw) of 100,000, and a molecular weight distribution of 1.11. Further, the ¹H-NMR measurement of the diblock copolymer after polymerization in the second stage confirmed that the microstructure of the isoprene block was composed of poly(1,4-isoprene) at 92% and poly(1,2-isoprene) and poly(3,4-isoprene) at 8%. The GPC measurement of the hydrogenated block copolymer after hydrogenation confirmed that the hydrogenated block copolymer had a number-average molecular weight (Mn) of 101,000, a weight-average molecular weight (Mw) of 108,000, and a molecular weight distribution of 1.07. The triblock copolymer after hydrogenation had a glass transition temperature of 142°C according to the TMA measurement.

### [Example 13]

Except for the following change points, a phase difference film was obtained and evaluated by the same operations as those of Example 1.
- In the step (1-1), the monomers used for the polymerization reaction in the first stage and the polymerization reaction in the third stage were changed to 1-vinylnaphthalene. The amount of 1-vinylnaphthalene used for the polymerization reaction in the first stage, the amount of isoprene used for the polymerization reaction in the second stage, and the amount of 1-vinylnaphthalene used for the polymerization reaction in the third stage were 9 g, 6 g, and 9 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 89,000, a weight-average molecular weight (Mw) of 100,000, and a molecular weight distribution of 1.12. Further, the ¹H-NMR measurement of the diblock copolymer after polymerization in the second stage confirmed that the microstructure of the isoprene block was composed of poly(1,4-isoprene) at 93% and poly(1,2-isoprene) and poly(3,4-isoprene) at 7%. The GPC measurement of the hydrogenated block copolymer after hydrogenation confirmed that the hydrogenated block copolymer had a number-average molecular weight (Mn) of 107,000, a weight-average molecular weight (Mw) of 114,000, and a molecular weight distribution of 1.07. The triblock copolymer after hydrogenation had a glass transition temperature of 142°C according to the TMA measurement.

### [Example 14]

Except for the following change points, a phase difference film was obtained and evaluated by the same operations as those of Example 1.
- In the step (1-1), the monomers used for the polymerization reaction in the first stage and the polymerization reaction in the third stage were changed to styrene. The amount of styrene used for the polymerization reaction in the first stage, the amount of isoprene used for the polymerization reaction in the second stage, and the amount of styrene used for the polymerization reaction in the third stage were 9 g, 6 g, and 9 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 92,000, a weight-average molecular weight (Mw) of 96,000, and a molecular weight distribution of 1.05. Further, the ¹H-NMR measurement of the diblock copolymer after polymerization in the second stage confirmed that the microstructure of the isoprene block was composed of poly(1,4-isoprene) at 92% and poly(1,2-isoprene) and poly(3,4-isoprene) at 8%. The GPC measurement of the hydrogenated block copolymer after hydrogenation confirmed that the hydrogenated block copolymer had a number-average molecular weight (Mn) of 92,000, a weight-average molecular weight (Mw) of 96,000, and a molecular weight distribution of 1.05. The triblock copolymer after hydrogenation had a glass transition temperature of 95°C according to the TMA measurement.

### [Example 15]

Except for the following change points, a phase difference film was obtained and evaluated by the same operations as those of Example 1.
- In the step (1-1), the monomer used for the polymerization reaction in the second stage was changed to butadiene. The amount of 2-vinylnaphthalene used for the polymerization reaction in the first stage, the amount of butadiene used for the polymerization reaction in the second stage, and the amount of 2-vinylnaphthalene used for the polymerization reaction in the third stage were 8 g, 8 g, and 8 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 95,000, a weight-average molecular weight (Mw) of 104,000, and a molecular weight distribution of 1.10. Further, the ¹H-NMR measurement of the diblock copolymer after polymerization in the second stage confirmed that the microstructure of the butadiene block was composed of poly(1,4-butadiene) at 90% and poly(1,2-butadiene) at 10%. The triblock copolymer after hydrogenation had a glass transition temperature of 140°C according to the TMA measurement.

### [Example 16]

Except for the following change points, a phase difference film was obtained and evaluated by the same operations as those of Example 1.
- In the step (1-1), the monomers used for the polymerization reaction in the first stage and the polymerization reaction in the third stage were changed to a mixture of 2-vinylnaphthalene and 1-vinylnaphthalene at a weight ratio of 1:1. Further, the monomer used for the polymerization reaction in the second stage was changed to butadiene. The amount of the mixture of 1-vinylnaphthalene and 2-vinylnaphthalene used for the polymerization reaction in the first stage, the amount of butadiene used for the polymerization reaction in the second stage, and the amount of the mixture of 1-vinylnaphthalene and 2-vinylnaphthalene used for the polymerization reaction in the third stage were 8 g, 8 g, and 8 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 94,000, a weight-average molecular weight (Mw) of 104,000, and a molecular weight distribution of 1.10. Further, the ¹H-NMR measurement of the diblock copolymer after polymerization in the second stage confirmed that the microstructure of the butadiene block was composed of poly(1,4-butadiene) at 89% and poly(1,2-butadiene) at 11%. The triblock copolymer after hydrogenation had a glass transition temperature of 140°C according to the TMA measurement.

### [Example 17]

Except for the following change points, a phase difference film was obtained and evaluated by the same operations as those in Example 1.
- In the step (1-1), the monomers used for the polymerization reaction in the first stage and the polymerization reaction in the third stage were changed to 1-vinylnaphthalene. Further, the monomer used for the polymerization in the second stage was changed to butadiene. The amount of 1-vinylnaphthalene used for the polymerization reaction in the first stage, the amount of butadiene used for the polymerization reaction in the second stage, and the amount of 1-vinylnaphthalene used for the polymerization reaction in the third stage were 8 g, 8 g, and 8 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 94,000, a weight-average molecular weight (Mw) of 104,000, and a molecular weight distribution of 1.10. Further, the ¹H-NMR measurement of the diblock copolymer after polymerization in the second stage confirmed that the microstructure of the butadiene block was composed of poly(1,4-butadiene) at 89% and poly(1,2-butadiene) at 11%. The triblock copolymer after hydrogenation had a glass transition temperature of 140°C according to the TMA measurement.

### [Example 18]

Except for the following change points, a phase difference film was obtained and evaluated by the same operations as those of Example 1.
- In the step (1-1), the monomers used for the polymerization reaction in the first stage and the polymerization reaction in the third stage were changed to styrene. Furthermore, the monomer used for the polymerization in the second stage was changed to butadiene. The amount of styrene used for the polymerization reaction in the first stage, the amount of butadiene used for the polymerization reaction in the second stage, and the amount of styrene used for the polymerization reaction in the third stage were 8 g, 8 g, and 8 g, respectively. The weight fraction of the block (A) in the triblock copolymer thus obtained and the glass transition temperature of the resin C were as shown in Table 1.

The GPC measurement confirmed that the triblock copolymer obtained before hydrogenation had a number-average molecular weight (Mn) of 91,000, a weight-average molecular weight (Mw) of 101,000, and a molecular weight distribution of 1.11. Further, the ¹H-NMR measurement of the diblock copolymer after polymerization in the second stage confirmed that the microstructure of the butadiene block was composed of poly(1,4-butadiene) at 90% and poly(1,2-butadiene) at 10%. The triblock copolymer after hydrogenation had a glass transition temperature of 95°C according to the TMA measurement.

The results of Examples and Comparative Examples are collectively shown in Table 1.

(Examples 1 to 7 and 11 to 18 are not claimed)

**Table 1**

| | Weight fractio n of A in resin C | Glass tr ansition temperat ure of r esin C | Triblock / diblock weight ratio | Stretc hing temper ature | Stret ching ratio | Re | NZ facto r | Proce ssabi lity | Displ ay ch aract erist ics |
|---|---|---|---|---|---|---|---|---|---|
| Ex. 1 | 80 | 135 | 100:00 | 145 | 1.5 | 270 | 0.5 | B | Good |
| Ex. 2 | 80 | 135 | 100:00 | 140 | 1.4 | 270 | 0.4 | B | Good |
| Ex. 3 | 80 | 135 | 100:00 | 135 | 1.3 | 270 | 0.3 | B | Good |
| Ex. 4 | 85 | 137 | 100:00 | 147 | 1.5 | 270 | 0.5 | B | Good |
| Ex. 5 | 70 | 129 | 100:00 | 143 | 1.5 | 270 | 0.5 | B | Good |
| Ex. 6 | 60 | 127 | 100:00 | 141 | 1.5 | 270 | 0.5 | B | Good |
| Ex. 7 | 55 | 125 | 100:00 | 139 | 1.5 | 270 | 0.5 | B | Good |
| Ex. 8 | 78 | 133 | 85:15 | 143 | 1.5 | 270 | 0.5 | A | Good |
| Ex. 9 | 77 | 132 | 75:25 | 142 | 1.5 | 270 | 0.5 | A | Good |
| Ex. 10 | 75 | 131 | 65:35 | 141 | 1.5 | 270 | 0.5 | A | Good |
| Ex. 11 | 80 | 135 | 100:00 | 145 | 1.5 | 140 | 0.5 | B | Good |
| Ex. 12 | 75 | 142 | 100:00 | 152 | 1.5 | 270 | 0.5 | B | Good |
| Ex. 13 | 75 | 142 | 100:00 | 152 | 1.5 | 270 | 0.5 | B | Good |
| Ex. 14 | 75 | 95 | 100:00 | 103 | 1.5 | 270 | 0.5 | B | Good |
| Ex. 15 | 67 | 140 | 100:00 | 145 | 1.5 | 270 | 0.5 | B | Good |
| Ex. 16 | 67 | 140 | 100:00 | 145 | 1.5 | 270 | 0.5 | B | Good |
| Ex. 17 | 67 | 140 | 100:00 | 145 | 1.5 | 270 | 0.5 | B | Good |
| Ex. 18 | 67 | 95 | 100:00 | 100 | 1.5 | 270 | 0.5 | B | Good |
| Comp. Ex. 1 | 100 | 143 | - | 155 | 1.5 | 270 | 0 | D | Poor |
| Comp. Ex. 2 | 95 | 142 | 100:00 | 153 | 1.5 | 270 | 0 | C | Poor |
| Comp. Ex. 3 | 45 | 121 | 100:00 | 129 | 1.5 | 270 | 0 | B | Poor |
| Comp. Ex. 4 | 80 | 135 | - | 145 | 1.5 | 270 | 0 | B | Poor |

As is clear from the results shown in Table 1, in Examples, phase difference films having a desired NZ factor close to 0.5 and excellent in processability and display characteristics were easily obtained. In particular, in Examples 8 to 10 in which the resin C further contained the diblock copolymer P" with a specific ratio of (A)-(B) as the block copolymer, the processability was particularly excellent.

## Claims

1. A phase difference film consisting of a resin C containing a copolymer P containing a polymerization unit A and a polymerization unit B,
the phase difference film including a phase separation structure that exhibits a structural birefringence, the phase separation structure including a phase including as a main component the polymerization unit A and another phase including as a main component the polymerization unit B, and
the phase difference film having an NZ factor of greater than 0 and smaller than 1, the NZ factor being a value represented by (nx - nz)/(nx - ny), wherein nx represents the refractive index in the direction in which a maximum refractive index is given among in-plane directions, ny represents the refractive index in the direction, among the in-plane directions of the film, orthogonal to the direction giving nx, and nz represents the refractive index in the thickness direction of the film, the refractive indices being measured at a wavelength of 540 nm;
and **characterized in that** the copolymer P includes:
a triblock copolymer P' that is an (A)-(B)-(A) triblock copolymer having blocks (A) including as a main component the polymerization unit A and a block (B) including as a main component the polymerization unit B; and
a diblock copolymer P" that is an (A)-(B) diblock copolymer having the block (A) and the block (B),
the ratio of the diblock copolymer P" relative to the total of the triblock copolymer P' and the diblock copolymer P" is 5 to 40% by weight.

2. The phase difference film according to claim 1, wherein the phase separation structure has a form of any of lamella, cylinder and spheroid, and
the distance between phases in the phase separation structure is 200 nm or less, the distance between phases being a value obtained by fitting of a scattering pattern to a theoretical curve, wherein the scattering pattern is a pattern obtained by measurement of small angle X-ray scattering.

3. The phase difference film according to claim 1 or 2, wherein the polymerization unit A is a unit represented by the general formula (A): 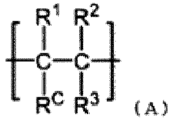
wherein R^{c} is a group selected from the group consisting of a phenyl group, a biphenyl group, a naphthyl group, an anthracene group, a phenanthrene group, a naphthacene group, a pentacene group, and a terphenyl group, and
R¹ to R³ are each independently a group selected from the group consisting of a hydrogen atom and an alkyl group of 1 to 12 carbon atoms.

4. The phase difference film according to any one of claims 1 to 3, wherein the polymerization unit B is a unit represented by the general formula (B-1), a unit represented by the general formula (B-2), or a combination of these: 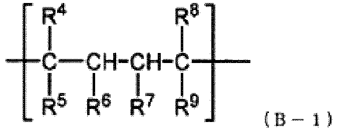 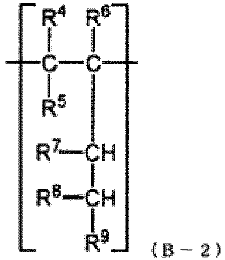 wherein R⁴ to R⁹ are each independently a group selected from the group consisting of a hydrogen atom and an alkyl group of 1 to 6 carbon atoms.

5. The phase difference film according to any one of claims 1 to 4, wherein the copolymer P has a negative intrinsic birefringence value.

6. The phase difference film according to any one of claims 1 to 5, wherein the polymerization unit A has a negative intrinsic birefringence value, and the polymerization unit B has a positive intrinsic birefringence value.

7. A method for producing the phase difference film according to any one of claims 1 to 6, comprising:
a step of forming a single layer film of a resin C; and
a step of causing phase separation of the resin C in the film.

8. The method for producing the phase difference film according to claim 7, wherein the step of causing phase separation of the resin C includes a step of applying to the film a stress along a thickness direction thereof.

9. The method for producing the phase difference film according to claim 7 or 8, wherein the step of forming the film includes melt-extruding the copolymer P in a single layer.

10. The method for producing the phase difference film according to any one of claims 7 to 9, further comprising a step of stretching the film.

## Patentansprüche

1. Phasendifferenzfilm, bestehend aus einem Harz C und ein Copolymer P enthaltend, das eine Polymerisationseinheit A und eine Polymerisationseinheit B enthält,
der Phasendifferenzfilm enthaltend eine Phasentrennungsstruktur, die eine strukturelle Doppelbrechung aufweist, wobei die Phasentrennungsstruktur eine Phase enthält, die als Hauptkomponente die Polymerisationseinheit A enthält, und eine andere Phase, die als Hauptkomponente die Polymerisationseinheit B enthält, und
der Phasendifferenzfilm einen NZ-Faktor von größer als 0 und kleiner als 1 aufweist, wobei der NZ-Faktor ein Wert ist, der durch (nx - nz)/(nx - ny) dargestellt wird, wobei nx den Brechungsindex in der Richtung darstellt, in der ein maximaler Brechungsindex unter den in der Ebene liegenden Richtungen gegeben ist, ny den Brechungsindex in der Richtung unter den in der Ebene liegenden Richtungen des Films darstellt, die orthogonal zu der Richtung ist, die nx ergibt, und nz den Brechungsindex in der Dickenrichtung des Films darstellt, wobei die Brechungsindizes bei einer Wellenlänge von 540 nm gemessen werden; und **dadurch gekennzeichnet, dass** das Copolymer P enthält:
ein Triblock-Copolymer P', das ein (A)-(B)-(A)-Triblock-Copolymer mit Blöcken (A) ist, die als Hauptkomponente die Polymerisationseinheit A enthalten, und einem Block (B), der als Hauptkomponente die Polymerisationseinheit B enthält; und
ein Diblock-Copolymer P", das ein (A)-(B)-Diblock-Copolymer mit dem Block (A) und dem Block (B) ist,
und das Verhältnis des Diblock-Copolymers P" zur Gesamtmenge des Triblock-Copolymers P' und des Diblock-Copolymers P" 5 bis 40 Gew.-% beträgt.

2. Phasendifferenzfilm nach Anspruch 1, wobei die Phasentrennungsstruktur die Form einer Lamelle, eines Zylinders oder eines Sphäroids hat, und
der Abstand zwischen den Phasen in der Phasentrennstruktur 200 nm oder weniger beträgt, wobei der Abstand zwischen den Phasen ein Wert ist, der durch Anpassen eines Streumusters an eine theoretische Kurve erhalten wird, wobei das Streumuster ein Muster ist, das durch Messung der Röntgenkleinwinkelstreuung erhalten wird.

3. Phasendifferenzfilm nach Anspruch 1 oder 2, wobei die Polymerisationseinheit A eine Einheit der allgemeinen Formel (A) ist: 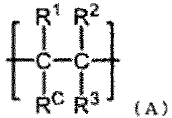
worin R^{C} eine Gruppe ist, die ausgewählt ist aus der Gruppe bestehend aus einer Phenylgruppe, einer Biphenylgruppe, einer Naphthylgruppe, einer Anthracengruppe, einer Phenanthrengruppe, einer Naphthacengruppe, einer Pentacengruppe und einer Terphenylgruppe, und
R¹ bis R³ sind jeweils unabhängig voneinander eine Gruppe, ausgewählt aus der Gruppe bestehend aus einem Wasserstoffatom und einer Alkylgruppe mit 1 bis 12 Kohlenstoffatomen.

4. Phasendifferenzfilm nach einem der Ansprüche 1 bis 3, wobei die Polymerisationseinheit B eine Einheit der allgemeinen Formel (B-1), eine Einheit der allgemeinen Formel (B-2) oder eine Kombination dieser Einheiten ist: 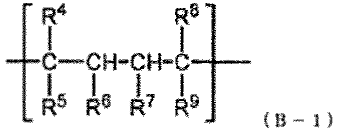 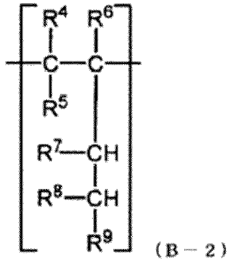 worin R⁴ bis R⁹ jeweils unabhängig voneinander eine Gruppe sind, die aus der Gruppe bestehend aus einem Wasserstoffatom und einer Alkylgruppe mit 1 bis 6 Kohlenstoffatomen ausgewählt ist.

5. Phasendifferenzfilm nach einem der Ansprüche 1 bis 4, wobei das Copolymer P einen negativen intrinsischen Doppelbrechungswert aufweist.

6. Phasendifferenzfilm nach einem der Ansprüche 1 bis 5, wobei die Polymerisationseinheit A einen negativen intrinsischen Doppelbrechungswert aufweist und die Polymerisationseinheit B einen positiven intrinsischen Doppelbrechungswert aufweist.

7. Verfahren zur Herstellung des Phasendifferenzfilms nach einem der Ansprüche 1 bis 6, umfassend:
einen Schritt zur Bildung eines einschichtigen Films aus einem Harz C; und
einen Schritt, der die Phasentrennung des Harzes C in dem Film bewirkt.

8. Verfahren zur Herstellung des Phasendifferenzfilms nach Anspruch 7, wobei der Schritt des Bewirkens der Phasentrennung des Harzes C einen Schritt des Anlegens einer Spannung an den Film entlang einer Dickenrichtung desselben umfasst.

9. Verfahren zur Herstellung des Phasendifferenzfilms nach Anspruch 7 oder 8, wobei der Schritt der Bildung des Films das Schmelzextrudieren des Copolymers P in einer einzigen Schicht umfasst.

10. Verfahren zur Herstellung des Phasendifferenzfilms nach einem der Ansprüche 7 bis 9, das ferner einen Schritt des Streckens des Films umfasst.

## Revendications

1. Film à différence de phase constitué d'une résine C contenant un copolymère P contenant une unité de polymérisation A et une unité de polymérisation B,
le film à différence de phase incluant une structure de séparation de phases qui présente une biréfringence structurelle, la structure de séparation de phases incluant une phase incluant, en tant que composant principal, l'unité de polymérisation A et une autre phase incluant, en tant que composant principal, l'unité de polymérisation B, et
le film à différence de phase ayant un facteur NZ supérieur à 0 et inférieur à 1, le facteur NZ étant une valeur représentée par (nx - nz)/(nx - ny), nx représentant l'indice de réfraction dans la direction dans laquelle un indice de réfraction maximal est donné parmi des directions dans le plan, ny représentant l'indice de réfraction dans la direction parmi les directions dans le plan du film, orthogonale à la direction donnant nx, et nz représentant l'indice de réfraction dans la direction d'épaisseur du film, les indices de réfraction étant mesurés à une longueur d'onde de 540 nm,
et **caractérisé en ce que** le copolymère P inclut :
un copolymère triséquencé P' qui est un copolymère triséquencé (A)-(B)-(A) ayant des séquences (A) incluant, en tant que composant principal, l'unité de polymérisation (A) et une séquence (B) incluant, en tant que composant principal, l'unité de polymérisation B, et
un copolymère biséquencé P" qui est un copolymère biséquencé (A)-(B) ayant la séquence (A) et la séquence (B),
le rapport du copolymère biséquencé P" par rapport au total du copolymère triséquencé P' et du copolymère biséquencé P" est de 5 à 40 % en poids.

2. Film à différence de phase selon la revendication 1, dans lequel la structure de séparation de phases a une forme quelconque parmi lamellaire, cylindrique et sphéroïdale, et
la distance entre phases dans la structure de séparation de phases est de 200 nm ou moins, la distance entre phases étant une valeur obtenue par ajustement d'un motif de diffusion à une courbe théorique, dans lequel le motif de diffusion est un motif obtenu par mesure de la diffusion des rayons X aux petits angles.

3. Film à différence de phase selon la revendication 1 ou 2, dans lequel l'unité de polymérisation A est une unité représentée par la formule générale (A) : 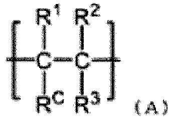
dans laquelle R^{c} est un groupe choisi parmi le groupe constitué d'un groupe phényle, d'un groupe biphényle, d'un groupe naphthyle, d'un groupe anthracène, d'un groupe phénanthrène, d'un groupe naphthacène, d'un groupe pentacène et d'un groupe terphényle, et
R¹ à R³ représentent chacun indépendamment un groupe choisi parmi le groupe constitué d'un atome d'hydrogène et d'un groupe alkyle de 1 à 12 atomes de carbone.

4. Film à différence de phase selon l'une quelconque des revendications 1 à 3, dans lequel l'unité de polymérisation B est une unité représentée par la formule générale (B-1), une unité représentée par la formule générale (B-2) ou une combinaison de celles-ci : 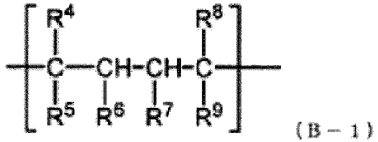 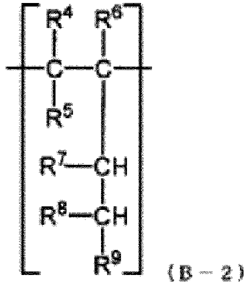 dans lesquelles R⁴ à R⁹ représentent chacun indépendamment un groupe choisi parmi le groupe constitué d'un atome d'hydrogène et d'un groupe alkyle de 1 à 6 atomes de carbone.

5. Film à différence de phase selon l'une quelconque des revendications 1 à 4, dans lequel le copolymère P a une valeur de biréfringence intrinsèque négative.

6. Film à différence de phase selon l'une quelconque des revendications 1 à 5, dans lequel l'unité de polymérisation A a une valeur de biréfringence intrinsèque négative, et l'unité de polymérisation B a une valeur de biréfringence intrinsèque positive.

7. Procédé pour produire le film à différence de phase selon l'une quelconque des revendications 1 à 6, comportant :
une étape de formation d'un film monocouche en une résine C, et
une étape entraînant une séparation de phases de la résine C dans le film.

8. Procédé pour produire le film à différence de phase selon la revendication 7, dans lequel l'étape entraînant une séparation de phases de la résine C inclut une étape consistant à appliquer au film une contrainte le long d'une direction d'épaisseur de celui-ci.

9. Procédé pour produire le film à différence de phase selon la revendication 7 ou 8, dans lequel l'étape de formation du film inclut l'extrusion à l'état fondu du copolymère P en une seule couche.

10. Procédé pour produire le film à différence de phase selon l'une quelconque des revendications 7 à 9, comportant en outre une étape d'étirage du film.
